# EUROPEAN PATENT SPECIFICATION

(11) **EP 3 589 834 B1**
(45) Date of publication and mention of the grant of the patent: **14.08.2024**
(21) Application number: 18761706.3
(22) Date of filing: 27.02.2018
(51) Int. Cl.: F02N 11/10, F02N 11/08, F02B 61/02, H02P 9/08, F02N 11/04, F02N 15/08, F02B 67/06, F02N 19/00, H02P 27/06

(54) **A STARTER SYSTEM FOR A VEHICLE**
STARTERSYSTEM FÜR EIN FAHRZEUG
SYSTÈME DE DÉMARREUR DESTINÉ À UN VÉHICULE

(30) Priority: 28.02.2017 IN 201741007029
(43) Date of publication of application: 08.01.2020
(73) Proprietor: TVS Motor Company Limited, Chennai 600006 (IN)
(72) Inventor: HEMAVATHY, Vaidyanathan, Chennai 600 006 (IN); PANDIAN MANIKANDAN, Thalakku, Chennai 600 006 (IN); SIVAKUMAR, Arumugham, Chennai 600 006 (IN); KUMAR, Davinder, Chennai 600 006 (IN)
(74) Representative: Patentanwaltskanzlei Matschnig & Forsthuber OG
(86) International application number: PCT/IB2018/051223
(87) International publication number: WO 2018/158679

(56) References cited:
- EP-A2- 2 824 314
- WO-A1-2016/199275
- DE-A1- 10 318 848
- US-A1- 2002 179 348
- US-A1- 2004 200 448
- US-A1- 2013 131 902
- US-A1- 2013 131 902
- US-A1- 2018 180 012

## Description

### TECHNICAL FIELD

The present subject matter relates generally to an internal combustion engine, and more particularly but not exclusively, to a starter system for the internal combustion engine.

### BACKGROUND

Generally, in two-wheeled or three-wheeled vehicles an internal combustion (IC) engine is either fixedly mounted to a frame assembly or is swingably supported by the frame assembly. The IC engine acts as powerhouse of the vehicle that helps in providing motion for the vehicle. Generally, the IC engine has to be cranked for it to start. For cranking the IC engine, a mechanical force is to be provided by the user or through a source of electrical energy. Typically, a kick-start/lever-operated mechanism or an electric start mechanism is provided for cranking the engine. In case of electrical system, an auxiliary power source drives an electrical machine for cranking the engine.

Also, in some vehicles as disclosed in a patent application US 2013/0131902 A1, an engine start control is implemented. The engine start control starts the engine by increasing a rotational speed of the engine to a first rotational speed (R1) and by supplying fuel to the engine, detecting if the rotational speed of the engine is greater than equal to the R1. If a further increase in the RPM is not detected, the engine start control device temporarily stops supply of electric power to the electric motor.
Further starting devices and starting methods are described in WO 2016/199275 A1 and US 2002/0179348 A1.

### SUMMARY OF INVENTION

The invention is defined in the independent claims 1 and 10. Optional features of the invention are described in the dependent claims 2-9 and 11.

### BRIEF DESCRIPTION OF DRAWINGS

The detailed description of the present subject matter is described with reference to the accompanying figures. Same numbers are used throughout the drawings to reference like features and components.
Fig. 1 (a) illustrates a left side view of an exemplary vehicle, in accordance with an embodiment of present subject matter.
Fig. 1 (b) illustrates a left side of an exemplary power unit, in accordance with the embodiment of Fig. 1 (a).
Fig. 2 (a) depicts a schematic view of the starter system, in accordance with the embodiment of Fig. 1 (b).
Fig. 2 (b) depicts a schematic circuit level view of the starter control system, an implementation in accordance with the embodiment of Fig. 2 (a).
Fig. 3 depicts a flow chart illustrating the method of operation of the starter system, in accordance with the embodiment of Fig. 2 (a).
Fig. 4 depicts a schematic block diagram of a power unit with ancillary parts, in accordance with another embodiment of the present subject matter.

### DETAILED DESCRIPTION

Generally, in vehicles provided with a mechanical start system like kick-start/lever-start, it is cumbersome for the user to start the vehicle by applying mechanical force, especially, in vehicles with higher engine capacity due to higher inertia. Therefore, an electrical machine functioning as a motor for starting the internal combustion engine is provided, which is referred to as electric starting system. Such electric starting systems are also implemented in small capacity vehicles. A battery is provided on the vehicle for driving the electrical machine as motor. Generally, another electrical machine is also provided in the vehicle that is used as a generator, which is a magneto. The generator is functional during the operation of the IC engine and the output of the generator is used to charge the battery.

However, with the advent of technology, a single electrical machine has come to use that operates as a starter and as a generator. This provides a compact vehicle layout and at the same time reduces the weight of the system due to elimination of multiple parts. In addition, the vehicle is also provided with one or more electrical system including a fuel injector, an anti-lock braking system, a vehicle control system, an ignition control system or a continuously running headlamp/daytime running lamp. One or more of the aforementioned electrical system are also driven by the battery provided on the vehicle. For example, the fuel injector or the ignition control unit should be operational even to start the vehicle and these systems are also driven by the battery at least during start of the IC engine. Therefore, sufficient battery charge is to be maintained to operate the various electrical systems of the vehicle. Especially, the battery charge should be maintained to enable cranking of the engine through the electrical starting system. In vehicle with smaller engine capacity and with compact layout, a low capacity battery is accommodated in the vehicle. Often there is a problem that the vehicle engine does not start within the first attempt of starter motor cranking & multiple attempts draw significant charge from the battery resulting in early drain of the battery. Additionally, the extent of cracking effort & speed involved in subsequent attempts may have to be higher to enable the engine to be started. Thus, there is a need for providing a starter system that utilizes the battery charge optimally. At the same time, the electrical starter system is to be optimized to reduce power consumption.

Thus, there is a need for electrical starter system that is optimized to reduce power consumption from the battery thereby saving battery charge for subsequent start attempts or for operation other essential sub-systems of the vehicle.

Hence, it is an object of the present subject matter to address the aforementioned and other problems in the prior art. Therefore, the present subject matter provides a starter system for an internal combustion for a two-wheeled or three-wheeled vehicle.

It is a feature of the present subject matter that the starter system is provided with a starter control unit that enables cranking of the engine at a first speed. Initially, the starter control unit enables operation of the starter means through the auxiliary power source at a first speed. The starter control unit then checks for a first parameter of the engine. Subsequently, the starter control unit depending on the first parameter checked enables operation of the starter means at a second speed. The second speed is chosen to be greater than the first speed.

It is a feature of the present subject matter that the starter control unit that excites a starter means including an integrated starter generator at a first speed for cranking the engine. It is an advantage that the starter system utilizes less power compared to conventional starting system as during first attempt, the engine is operated at low speed requiring low energy consumption.

It is an aspect of the present subject matter that the starter control unit is electrically coupled to engine to identify one or more vehicle parameters including an engine speed. The starter control unit detects the engine speed to detect status of the engine.

It is another aspect of the present subject matter that the starter control unit, depending on the identified or calculated vehicle parameters, engine parameters to be specific, cranks the engine at a second speed greater than the first speed when required. It is an advantage that the starter control unit progressively increments the cranking speed only when required during successive cranking attempts. It is an advantage that rate of battery usage is progressively increasing instead of constant higher consumption from the first instance itself.

It is another aspect that the present subject matter is capable of optimally utilizing battery power/charge especially for two-wheeled vehicles or three-wheeled vehicle having a saddle ride type layout having compact vehicle and engine layout. It is an advantage that the starter system reduces excessive power consumption for starting the engine and a small capacity battery mounted to the vehicle is optimally used. It is an additional advantage that the operation of other vehicle electronic and electrical sub-systems by the battery is retained.

It is another additional advantage that the starter system eliminates the need for a temperature sensor and utilizes an engine speed sensor provided on the vehicle. Therefore, any engine modifications are avoided thereby retaining the engine layout currently available.

It is an additional aspect that the starter control unit detects engine start and switches the ISG to generation mode thereby utilizing the generator output for charging the battery and for powering one or more electrical components of the vehicle.

It is another aspect of the present subject matter that the starter control unit enables the battery to be capable of driving one or more sub-systems of the vehicle including an ignition system, a headlamp intensity control, or a vehicle security system.

In one embodiment, the starter system enables cranking of the engine for a pre-determined amount of time, initially at the first speed and successively at the second speed, which is greater than the first speed. The starter system enables starting of the engine at successive incremented speeds, which is referred to as second speed, chosen to be greater than a previous speed, which is referred to as first speed.

It is an advantageous effect of the present subject matter that the starter control system comprising starter control unit enables cranking of the IC engine with reduced power consumption whereby the battery charge is utilized for other essential systems like security systems.

The aforementioned and other advantages of the present subject matter would be described in greater detail in conjunction with the figures in the following description.

In relation to the following description of embodiment(s), arrows as and where provided in the top right corner of each figure depicts direction with respect to the vehicle, wherein the arrow F denotes front direction, an arrow R indicates rear direction, an arrow Up denotes upward direction, an arrow Dw denotes downward direction. Also, an arrow with LH denotes a left side, and an arrow with RH denotes a right side of the vehicle.

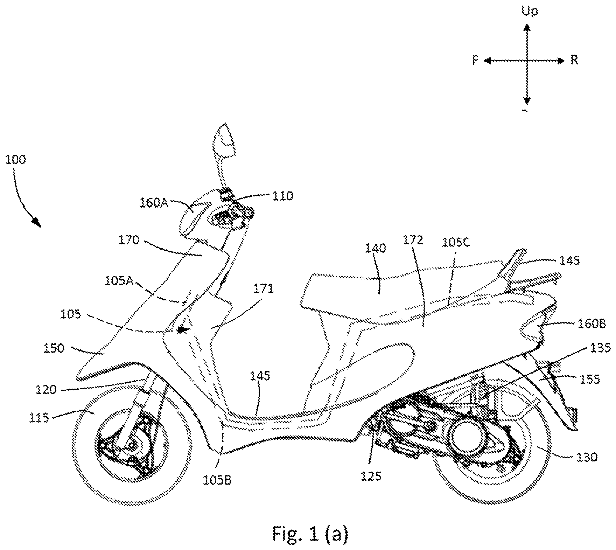

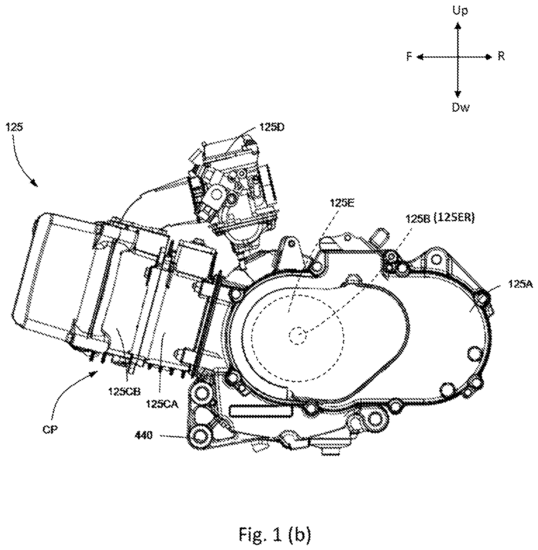

Fig. 1 illustrates a left side view of an exemplary two-wheeled vehicle, in accordance with an embodiment of the present subject matter. The vehicle 100 has a frame assembly 105 that includes a head tube 105A, a main tube 105B extending rearwardly downward from the head tube 105A, and a pair of railings 105C extending inclinedly rearward from a rear portion of the main tube 105B. A handlebar assembly 110 is connected to a front wheel 115 through one or more front suspension(s) 120. A steering shaft (not shown) connects the handlebar assembly 110 to the front suspension(s) 120. The steering shaft is rotatably journaled about the head tube 105A. A power unit 125 including at least one of an internal combustion engine and/or a traction motor is disposed in a posterior portion of the vehicle 100. In a second embodiment, the power unit may be fixedly mounted in the front portion of the vehicle. In the present embodiment, the IC engine is forwardly inclined i.e. a piston axis of the IC engine is forwardly inclined. In other embodiment, the IC engine can be a vertical or horizontal type. Hereinafter, the terms 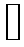 power unit 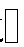 and 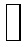 IC engine 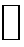 are interchangeably used. The power unit 125 is functionally connected to a rear wheel 130 through a transmission system (not shown). The transmission system includes a continuously variable transmission or a fixed gear ratio transmission or automatic-manual transmission.

Further, the rear wheel 130 is connected to the frame assembly 105 through one or more rear suspension(s) 135. The power unit 125 is swingably mounted to the frame assembly 105 through a toggle link or the like. A seat assembly 140 is disposed above a utility box (not shown) and is supported by the pair of railing(s) 105C. A passenger grip 145 is provided posterior to the seat assembly 140 for pillion/passenger support.

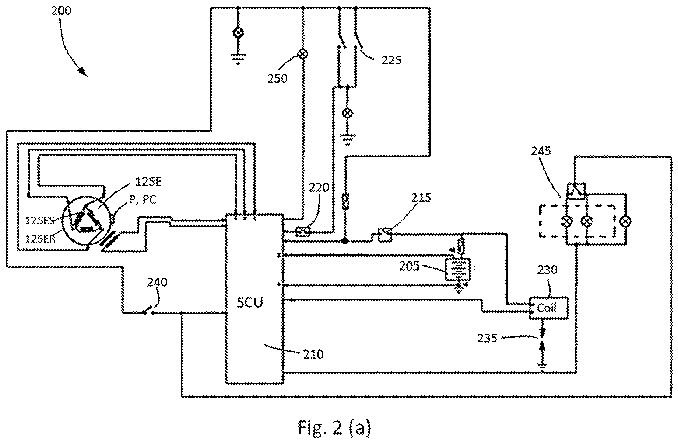

Further, the vehicle 100 includes a front fender 150 covering at least a portion of the front wheel 115. In the present embodiment, the vehicle 100 includes a step-through space and a floorboard 145 is disposed at the step-through space and the floor board 145 is supported by the main tube 105B. The user can operate the vehicle 100 by resting feet on the floorboard 145, in a sitting position. In an embodiment, a fuel tank (not shown) is disposed below the seat assembly 140. A rear fender 155 is covering at least a portion of the rear wheel 130. The vehicle 100 comprises of plurality of electrical/electronic components including a headlight 160A, a tail light 160B, a battery (shown in Fig. 2 (a)), a transistor controlled ignition (TCI) unit (not shown), an alternator (not shown), a starter motor (not shown). Further, the vehicle 100 includes a synchronous braking system, an anti-lock braking system, or a fuel injector.

The vehicle 100 includes plurality of panels that include a front panel 170 disposed in an anterior portion of the head tube 105A, a leg shield 171 disposed in a posterior portion of the head tube 105A. Further, a rear panel assembly 172 extending downwardly of the seat assembly 140 and extends rearward from a rear portion of the floorboard 145 towards a rear portion of the vehicle 100. The rear panel assembly 172 encloses the utility box. Also, the rear panel assembly 172 partially encloses the power unit 125. The IC engine 125 includes an air intake system (not shown), an air fuel supply system (not shown) that are coupled to an intake side of the IC engine 125 and are disposed on the IC engine 125. Also, an exhaust system (not shown) is coupled to exhaust side of the IC engine 125 and the exhaust system extends towards one lateral side of the vehicle 100.

Fig. 1 (b) depicts a left side view of the power unit, in accordance with the embodiment depicted in Fig. 1 (a). The power unit 125 includes a crankcase 125A comprising at least two portions including plurality of apertures and mounting portion for rotatably supporting various components including a crankshaft 125B. The crankshaft 125B is rotatably supported by the crankcase 125A and the crankshaft 125B is connected to a piston (not shown) having a reciprocating motion about a cylinder portion CP therein. The reciprocating motion of the piston is converted into a rotating motion of the crankshaft 125B. The cylinder portion CP includes a cylinder body 125CA and a cylinder head 125CB that are supported by the crankcase 125A. Further, the power unit 125 includes an air-fuel supply means 125D that includes a carburetor or a fuel injector. Furthermore, a spark plug (not shown) is provided for creation of spark for combustion of air-fuel mixture.

Further, the crankshaft 125B is mounted with an electrical machine 125E. In one embodiment, the electrical machine 125E is connected to the crankshaft through gear or a belt. In a preferred embodiment, the electrical machine 125E is an integrated starter-generator (ISG) 125E. Hereinafter, the terms 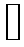 electrical machin 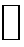 and 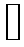 ISG 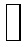 or 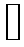 integrated starter generator 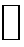 are interchangeably used. In another embodiment, the electrical machine 125E is a motor that is functionally connected to the crankshaft 125B. The ISG 125E includes a rotor 125ER and a stator 125ES (shown in Fig. 2 (a)) and the rotor 125ER is connected to the crankshaft 125B. The rotor 125ER includes magnetic members and the stator 125ES is provided with plurality of windings that are triggered by an auxiliary power source 205 through a starter control unit 210 (shown in Fig. 2(a)).

Fig. 2 (a) depicts a schematic view of a starter system for the power unit of the vehicle, in accordance with the embodiment of Fig. 1 (b). The starter system 200 includes a starter control unit (SCU) 210 and an auxiliary power source 205. The auxiliary power source 205 includes a lead acid battery, a lithium ion battery, a fuel cell, or a hydrogen cell. Hereinafter, the auxiliary power source 205 is interchangeably referred to as battery 205. In the present embodiment, the ISG 125E is a three-phase brushless direct current (BLDC) machine with the rotor 125ER having low cost ferrite permanent magnets disposed annularly on the rotor 125ER. The stator 125ES is provided with three-phase delta winding. In one embodiment, a star type winding is used.

The integrated starter-generator 125E functions as a motor when the windings of the stator 125ES is excited by the starter control unit 210 through the auxiliary power source 205. This enables in rotation of the crankshaft whereby the ISG 125E cranks the engine 125. The stator winding is connected with the starter control unit 210 through high current carrying wires. After starting the engine 125, the ISG 125E functions as a generator, wherein the current/voltage for charging is transferred through the high current carrying wires. Further, the rotor 125ER of the ISG 125E is provided with a ferromagnetic protrusion P that is provided on an outer peripheral surface. Also, a pulser coil PC, which will generate a voltage signal indicative of the rotor position when the protrusion P is in proximity thereof is provided. The pulser coil PC is connected to the starter control unit 210, whereby the starter control unit 210 detects the position of the rotor 125ER. This enables the starter control unit 210 to identify the position of the rotor 125ER and also to calculate the speed of the engine 125.

In a second embodiment, instead of the pulser coil one or more hall effects sensors are used.

Further, the starter system 200 includes an ignition switch 215 and an electric start switch 220, which are disposed on the handle bar 110 of the vehicle 100. The electric start switch 220 in an ON state enables transfer of power from battery 205 to the ISG 125E through the starter control unit 210 to crank the engine 125. In an embodiment, at least one brake switch 225 is provided that is functionally connected to brakes of the vehicle 100. To enable starting of the engine 125, the status of the electric start switch 220 should be ON in addition to the ignition switch 215 to be ON. The starter system 200 includes an ignition coil 230 and a spark plug 235 that are timed to trigger according to various parameters by the starter system 200, wherein the various parameters include engine speed, load on the vehicle, throttle position etc. Further, the vehicle 100 includes a headlamp switch 240 for operating the headlamp 160A. Also, the vehicle is provided with a headlamp high beam and a low beam switch 245 to manually control the operation of the headlamp 160A. Further, the vehicle 100 is provided with a vehicle status indicator 250, preferably provided on the handle bar 110 of the vehicle 100.

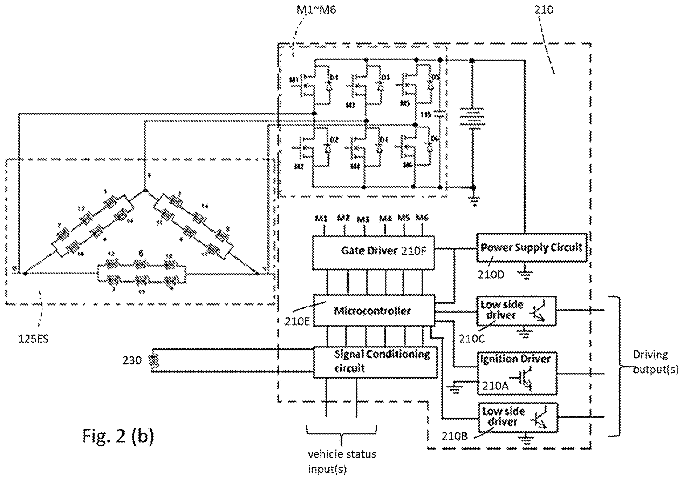

Fig. 2 (b) depicts a schematic circuit level view of the starter control system, an implementation in accordance with the embodiment of Fig. 2 (a). The starter control unit 210 includes a microcontroller 210E or a microprocessor that is capable of receiving data from the pulser coil PC, whereby the starter control unit 210 calculates a first parameter of the engine, which is speed of the engine 125 or the rate of change of speed of the rotor 125ER. Also, the starter control unit 210 includes an ignition driver 210A capable of driving the ignition coil 230. The starter control unit 210 includes plurality of Metal oxide semiconductor field effect transistors (MOSFETs) M1, M2, M3, M4, M5, and M6 that are electrically coupled to the winding of the stator 125ES. The MOSFETs M1-M6 is driven by the microcontroller 210E through a gate driver 210F. In addition, the MOSFETs M1- M6 act as converters to rectify and regulate alternating voltage (AC) generated by the ISG 125E into a direct current voltage for charging the battery 205, when the ISG 125E is functioning as generator. Further, the starter control unit 210 includes one or more low side drivers 210B, 210C for driving at least one lamp of the vehicle 100 including the headlamp 160A. Further, the vehicle 100 includes the vehicle status indicator 250, which is also driven by the low side drivers. In an embodiment, the vehicle status indicator 250 is disposed in a speedometer of the vehicle 100.

In one embodiment, the starter control unit 210 is also capable of controlling headlamp 160A activation based on headlamp switch 240 input. As the headlamp current passes through the headlamp-switch 240, sufficient wetting current ensures enhancing reliability of the switch, which otherwise will only carry a small signal current to the starter control unit 210. The starter control unit 210 takes inputs from the vehicle status such as electric start switch 220, or brake switch 225 that are collectively referred to as 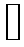 vehicle status input(s) 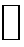 . Similarly, the starter control unit 210 provides various driving outputs including vehicle status indicator 250, malfunction indicator, head lamp driving output, or ignition output that are collectively referred to as 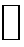 driving output(s) 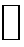 .

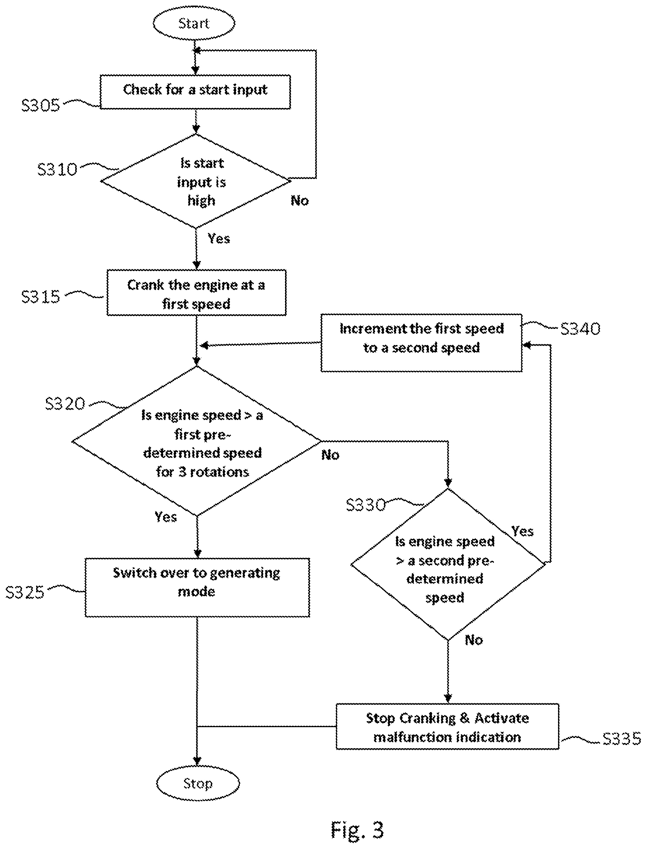

Fig. 3 depicts a flowchart for method of operation of the starter system 200, in accordance with the embodiment of Fig. 2 (a). At step S305, the starter system 200 checks for a start input, which includes checking status of at least any one of the ignition switch 215 and electric start switch 220. At step S310, the starter control unit 210 of the starter system checks if the start input is high (ON state), this includes checking status of the electric switch 220. In other embodiment, the start input includes checking status of electric start switch 220 and status of at least one brake switch 225. If the start input is high or active, the starter system 200 will be cranking the engine 125 and if the start input is low or inactive, the starter system 200 checks for start input as defined in steps S305/S310.

Once the start input is high, the starter system 200 at step S315 enables cranking of the engine at a first speed. The starter control unit 210 enables cranking of the engine 125 by exciting that stator 125ES which results in rotation of the rotor 125ER of the ISG 125E whereby the crankshaft of the engine 125 is rotated at the first speed. Therefore, the starter system 200 utilizes low power from the battery 205. At step S320, the starter control unit 210 of the starter system 200 calculates the engine speed through the data provided by the pulser coil PC. Then the starter control unit 210 checks if the calculated engine speed is greater than a first pre-determined engine speed and/or for a pre-determined time. In a preferred embodiment, the starter control unit 210 checks the speed for at least two or more engine cycles. If the calculated engine speed is greater than the first pre-determined speed for a pre-determined time, the starter control unit 210 identifies that the engine has started and switches the ISG 125E to generation mode at step S325. However, at step S320, if the calculated engine speed is less than the first pre-determined speed then the starter control unit 210 compares the calculated engine speed with a second pre-determined speed, which is maximum crank speed, during every crank attempt, the number of crank attempts 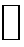 n 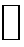 varies depending on engine start status and depending on increment value. If the calculated speed, which is the current cranking speed, is greater than the second pre-determined speed, then the starter control unit 210 identifies that the engine 125 is malfunctioning or identifies that a system failure has occurred and stops cranking of the engine 125 to prevent failure any other systems. The starter control unit 210 activates the vehicle status indicator 250 of the vehicle 100 provided in the display or on the handle bar 110. In an embodiment, the second pre-determined speed value is set less than an idling speed of the engine 125.

If at S330, the starter control unit 210 identifies that the calculated engine speed is lesser than the second pre-determined speed, which is the maximum crank speed, then the starter control unit 210 cranks the engine at a second speed that is greater than the first speed at step S340 by incrementing the current cranking speed to a value greater than the previous cranking speed. At step S340, the starter system utilizes higher power when compared to power used for cranking at first speed, which is previous cranking speed. After cranking of the engine at second speed through excitation of the ISG 125E, the starter control unit 210, at step S320, again calculates the engine speed and compares with the first pre-determined speed. If the engine speed is equal to or greater than the first pre-determined speed, then the starter system 200 identifies that the engine has started and switches the ISG 125E to generator mode.

For example, the first pre-determined speed is set to an idling speed of the engine, say 1200RPM. The starter control unit 210 drives the starter control unit 210, to operate in motor mode, at a first speed, say 500 RPM. The starter control unit 210 controls the conduction state of the MOSFETs (M1-M6). The starter control unit 210 of the starter system calculates the engine speed with a first pre-determined speed, which is 1200RPM. The starter control unit 210 attempts to start the engine 125 by initially cranking the engine 125 at a lower cranking speed, which is the first speed. If the engine starts, the calculated engine speed will be greater than or equal to the first pre-determined speed. But, if the calculated engine speed is less than the first pre-determined speed, which is 1200RPM, then the starter control unit 210 identifies that the engine has not started. In one embodiment, the starter control unit 210 calculates the speed for a predetermined number of cranking cycles, say three engine cycles. Then the starter control unit 210 increases the first speed to a higher speed, which is the second speed. Therefore, the starter control unit 210 increases the first speed by 50 RPM, which is 550 RPM being the second speed. The starter system 200 cranks at the set second speed, which is 550RPM, and calculates the engine speed for three engine cycles. If the calculated engine speed reaches the first pre-determined speed, then the starter control unit 210 determines that the engine has started. The starter control unit 210 performs cranking of the engine by progressively increasing the cranking speed, till the cranking speed reaches the second pre-determined speed, which is e.g. 1000 RPM. If the calculated engine speed does not reach the first pre-determined speed, and the cranking speed reaches the second pre-determined speed, then the starter control unit 210 activates the malfunction indicator 250, at step S335. The starter control unit 210 additionally enables operation of the vehicle in hybrid mode, in case the vehicle is a hybrid vehicle.

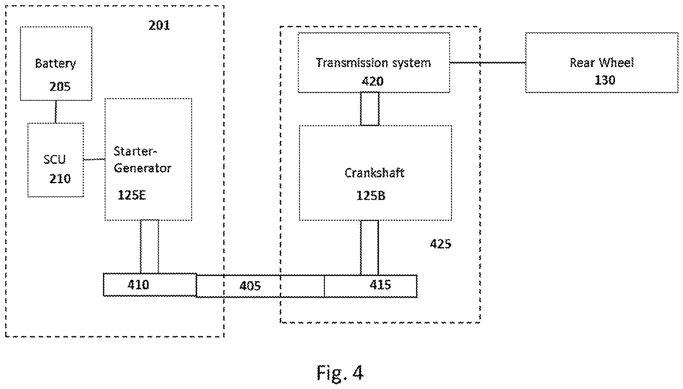

Fig. 4 depicts a schematic block diagram of an engine assembly with ancillary systems, in accordance with another embodiment of the present subject matter. A power unit 425 includes a crankshaft 125B rotatably supported by a crankcase 125A (shown in Fig. 1 (b)). The crankshaft 125B is connected to a transmission system 420. The transmission 420 converts torque from crankshaft 125B suitable for driving the rear wheel 130 depending on the operating condition of the vehicle. A starter-generator 125E is electrically connected with a battery 205 through the Starter Control Unit 210.

The starter system 201, disposed as a separate module from the power unit 425, includes a starter-generator 125E having an inner rotor (not shown) and a stator 125ES. The stator 125ES is fixedly connected with a crankcase 125A of the power unit 425. Further, the power unit 425 includes a drive pulley 410 connected to the starter-generator 125E, specifically to a rotor, a driven pulley 415 is connected with the crankshaft 125B, and a belt drive 405 connects the drive pulley 410 with the driven pulley 415. The driven pulley 415 exhibits a polar moment of inertia required to regulate torque ripple generated at the crankshaft 125B due to discontinuous power generation in the combustion chamber of the power unit 125. The driven pulley 415 acts as a flywheel for the power unit 425. Further, the starter system 201 enables cranking the power unit 325 in accordance with the method of operation of the starter system 201 as depicted in Fig. 3.

The integrated starter-generator 125E functions as a motor when the stator 125ES is excited by the starter control unit 210 through the auxiliary power source 205, whereby the crankshaft 125B is cranked through the belt drive 405. This enables the ISG 125E to crank the engine 425. Subsequent to starting the engine 125, the ISG 125E functions as a generator, whereby the crankshaft 125B drives the rotor through the belt drive 405. In another embodiment, the power source 205 can be the primary power source of the vehicle.

In the present embodiment, a first speed and a second speed are used. However, the starter system may have 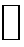 n 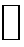 speeds, wherein each successive speed is either progressively, exponentially, or randomly incremented as required by manufacturer.

In one embodiment, the starter control unit enables rotation of the crankshaft in a reverse rotation, through the ISG, so that the piston is positioned in a start position of an expansion stroke. This provides sufficient momentum while cranking the engine by rotating in the conventional direction thereby overcoming compression pressure. In the aforementioned embodiment, MOSFETs are use. However, other semiconductor switches such as bipolar junction transistors or insulated-gate bipolar transistors can be used. Also, the electric start switch could be a micro switch capable of exhibiting low wetting current.

## Claims

1. A starter system (200, 201) for a vehicle (100), said starter system (200, 201) comprising:
a starter means (125E) functionally connected to a crankshaft (125B) of a power unit (125, 425) of said vehicle (100);
a power source (205) electrically coupled to said starter means (125E) for driving said starter means (125E); and
a starter control unit (210) having means (M1-M6, 210F) for controlling the rotation speed of the starter means (125E) and having means for calculating a first parameter, which includes at least one of an engine speed, a rotational speed of crankshaft (125B) or a rotational speed of one of more rotating members connected to said crankshaft (125B),
wherein said starter control unit (210), during an initial attempt to start the engine, is trying to crank said power unit (125, 425) through said starter means (125E), whose rotational speed is increased up to a first speed,
said starter control unit (210) checks, based on at least the first parameter of said power unit (125, 425), whether the power unit has started or not, and, during a first attempt to start the engine after the initial attempt is unsuccessful, said starter control unit (210) is trying to crank said power unit (125, 425) through said starter means (125E), whose rotational speed is increased up to a second speed,
said starter control unit being **characterized in that**
said second speed is greater than said first speed.

2. The starter system (200, 201) as claimed in claim 1, wherein said starter means (125E) includes a rotor (125ER), and said rotor (125ER) is mounted to at least one of said crankshaft (125B) or a shaft disposed substantially parallel to said crankshaft (125B)..

3. The starter system (200, 201) as claimed in claim 1, wherein said starter means (125E) includes an integrated starter generator (125E), a magneto, or an electric motor, wherein said integrated starter generator (125E) includes a stator (125ES) and a rotor (125ER), said rotor (125ER) functionally connected to said crankshaft (125B) and said rotor comprising plurality of magnetic members, and said stator (125ES) supported by said power unit (125).

4. The starter system (200, 201) as claimed in claim 1, wherein said starter control unit (210) is capable of rotating said crankshaft (125B) in a reverse rotation so that a piston of the power unit (125, 425) is positioned in a start position of an expansion stroke thereof.

5. The starter system (200, 201) as claimed in claim 1, wherein said starter control unit (210) compares said first parameter being an engine speed, during every crank attempt, with a second pre-determined speed, and starter control unit (210) identifies a malfunction when said first speed is equal to or greater than said second-predetermined speed.

6. The starter system (201) as claimed in claim 1, wherein said starter system (201) disposed substantially separately from said power unit (425), wherein a drive pulley (410) connected to the rotor (125ER) of the starter means (125E) and a driven pulley (415) connected to the crankshaft (125B), and a belt drive (405) connecting the drive pulley (410) with the driven pulley (415) whereby said the driven pulley (415) is adapted to act as a flywheel for the power unit (425).

7. The starter system (200, 201) as claimed in claim 1, wherein said first speed is incremented to said second speed by at least one of progressive increment, exponential increment, and random increment.

8. The starter system (200, 201) as claimed in claim 1, wherein said starter control unit (210) includes plurality of Metal oxide semiconductor field effect transistors (M1, M2, M3, M4, M5, and M6) that are electrically coupled to a winding(s) of said stator (125ES), and plurality of Metal oxide semiconductor field effect transistors (M1, M2, M3, M4, M5, and M6) driven by a microcontroller (210E) of said starter control unit (210), and said windings are connected at least by one of star or delta connection.

9. The starter system (200, 201) as claimed in claim 1, wherein vehicle (100) includes at least one of a two-wheeled vehicle (100) or a three-wheeled vehicle.

10. A method of starting a power unit (125, 425) through a starter system (200, 201), said power unit (125, 425) having means (M1-M6, 210F) for controlling the rotation speed of the starter means (125E) and having means for calculating a first parameter, which includes at least one of an engine speed, a rotational speed of crankshaft (125B) or a rotational speed of one of more rotating members connected to a crankshaft (125B) operatively connected to a starter means (125E), said method comprising the steps of:
enabling said starter means (125E), during an initial attempt to start the engine, to crank said power unit (125, 425), whose rotational speed is increased up to a first speed by a starter control unit (210) of said starter system (200, 201);
checking for the first parameter of said power unit (125, 425) , whether the power unit has started or not; and
depending on said first parameter enabling cranking of said power unit (125, 425) during a first attempt to start the engine after the initial attempt is unsuccessful, said starter control unit (210) trying to crank said power unit (125, 425) through said starter means (125E), whose rotational speed is increased up to a second speed, wherein said second speed is greater than said first speed.

11. The method of starting a power unit (125, 425) as claimed in claim 10, further comprises comparing, during every crank attempt, said first speed with a second pre-determined speed, and activating a malfunction signal when said first speed is equal to or greater than said second-predetermined speed.

## Patentansprüche

1. Anlassersystem (200, 201) für ein Fahrzeug (100), wobei das Anlassersystem (200, 201) aufweist:
eine Anlassereinrichtung (125E), die mit einer Kurbelwelle (125B) einer Antriebseinheit (125, 425) des Fahrzeugs (100) funktionell verbunden ist;
eine Stromquelle (205), die an die Anlassereinrichtung (125E) elektrisch angeschlossen ist, zum Antreiben der Anlassereinrichtung (125E); und
eine Anlasser-Steuereinheit (210) mit Mitteln (M1-M6, 210F) zum Steuern der Drehgeschwindigkeit der Anlassereinrichtung (125E) und mit Mitteln zum Berechnen eines ersten Parameters, der zumindest eine Motordrehzahl, eine Drehzahl der Kurbelwelle (125B) und/oder eine Drehzahl eines oder mehrerer mit der Kurbelwelle (125B) verbundenen rotierenden Elemente umfasst,
wobei die Anlasser-Steuereinheit (210) während eines anfänglichen Versuchs, den Motor zu starten, versucht, die Antriebseinheit (125, 425) durch die Startereinrichtung (125E) anzulassen, deren Drehgeschwindigkeit auf eine erste Geschwindigkeit erhöht wird,
die Anlasser-Steuereinheit (210) aufgrund zumindest des ersten Parameters der Antriebseinheit (125, 425) prüft, ob die Antriebseinheit gestartet ist oder nicht, und während eines ersten Versuchs, den Motor zu starten, nachdem der anfängliche Versuch erfolglos war, die Anlasser-Steuereinheit (210) versucht, die Antriebseinheit (125, 425) durch die Startereinrichtung (125E) anzulassen, deren Drehzahl auf eine zweite Drehzahl erhöht wird,
wobei die Anlasser-Steuereinheit **dadurch gekennzeichnet ist, dass**
die zweite Drehzahl größer ist als die erste Drehzahl.

2. Anlassersystem (200, 201) nach Anspruch 1, wobei die Anlassereinrichtung (125E) einen Rotor (125ER) aufweist und der Rotor (125ER) an der Kurbelwelle (125B) und/oder einer im Wesentlichen parallel zur Kurbelwelle (125B) angeordneten Welle befestigt ist.

3. Anlassersystem (200, 201) nach Anspruch 1, wobei die Anlassereinrichtung (125E) einen integrierten Anlassergenerator (125E), einen Induktorantrieb oder einen Elektromotor umfasst, wobei der integrierte Anlassergenerator (125E) einen Stator (125ES) und einen Rotor (125ER) beinhaltet, wobei der Rotor (125ER) funktionell mit der Kurbelwelle (125B) verbunden ist und eine Vielzahl magnetischer Elementen umfasst und der Stator (125ES) von der Leistungseinheit (125) gehalten wird.

4. Anlassersystem (200, 201) nach Anspruch 1, wobei die Anlasser-Steuereinheit (210) dazu geeignet ist, die Kurbelwelle (125B) in eine Rückwärtsdrehung zu versetzen, so dass ein Kolben der Leistungseinheit (125, 425) in dessen Startposition eines Expansionshubs positioniert wird.

5. Anlassersystem (200, 201) nach Anspruch 1, wobei die Anlasser-Steuereinheit (210) den ersten Parameter, der eine Motordrehzahl ist, bei jedem Versuch des Anlassens mit einer zweiten, vorbestimmten Drehzahl vergleicht und die Anlasser-Steuereinheit (210) eine Fehlfunktion erkennt, wenn die erste Drehzahl gleich oder größer als die zweite, vorbestimmte Drehzahl ist.

6. Anlassersystem (201) nach Anspruch 1, wobei das Anlassersystem (201) im Wesentlichen getrennt von der Leistungseinheit (425) angeordnet ist, wobei eine Antriebsriemenscheibe (410) mit dem Rotor (125ER) der Anlassereinrichtung (125E) verbunden und eine angetriebene Riemenscheibe (415) mit der Kurbelwelle (125B) verbunden ist und ein Riementrieb (405) die Antriebsriemenscheibe (410) mit der angetriebenen Riemenscheibe (415) verbindet, wobei die angetriebene Riemenscheibe (415) dazu eingerichtet ist, als Schwungrad für die Antriebseinheit (425) zu wirken.

7. Anlassersystem (200, 201) nach Anspruch 1, wobei die erste Drehzahl auf die zweite Drehzahl gemäß zumindest eines von fortschreitender Zunahme, exponentieller Zunahme und zufälliger Zunahme erhöht wird.

8. Anlassersystem (200, 201) nach Anspruch 1, wobei die Anlasser-Steuereinheit (210) eine Vielzahl von Metalloxid-Halbleiter-Feldeffekttransistoren (M1, M2, M3, M4, M5 und M6) enthält, die elektrisch mit einer oder mehreren Wicklungen des Stators (125ES) verbunden sind, und die Vielzahl von Metalloxid-Halbleiter-Feldeffekttransistoren (M1, M2, M3, M4, M5 und M6) von einem Mikrocontroller (210E) der Anlasser-Steuereinheit (210) angesteuert werden, und die Wicklungen in Stern- und/oder Dreieck-Schaltung angeschlossen sind.

9. Anlassersystem (200, 201) nach Anspruch 1, wobei das Fahrzeug (100) ein zweirädriges Fahrzeug (100) und/oder ein dreirädriges Fahrzeug beinhaltet.

10. Verfahren zum Starten einer Antriebseinheit (125, 425) durch ein Anlassersystem (200, 201), wobei die Antriebseinheit (125, 425) Mittel (M1-M6, 210F) zum Steuern der Drehgeschwindigkeit der Anlassereinrichtung (125E) und Mittel zum Berechnen eines ersten Parameters aufweist, der zumindest eine Motordrehzahl, eine Drehzahl einer Kurbelwelle (125B) und/oder eine Drehzahl eines oder mehrerer mit einer Kurbelwelle (125B) verbundenen rotierenden Elemente, die betriebsmäßig mit einer Startereinrichtung (125E) verbunden ist, umfasst,
wobei das Verfahren die folgenden Schritte umfasst:
Zulassen, dass die Anlassereinrichtung (125E) während eines anfänglichen Versuchs, den Motor zu starten, die Antriebseinheit (125, 425) anlässt, deren Drehgeschwindigkeit durch eine Anlasser-Steuereinheit (210) des Anlassersystems (200, 201) auf eine erste Geschwindigkeit erhöht wird;
Prüfen auf den ersten Parameter der Antriebseinheit (125, 425), ob die Antriebseinheit gestartet ist oder nicht; und
in Abhängigkeit von dem ersten Parameter, Zulassen des Anlassens der Antriebseinheit (125, 425) während eines ersten Versuchs, den Motor zu starten, nachdem der anfängliche Versuch erfolglos war, wobei die Anlasser-Steuereinheit (210) versucht, die Antriebseinheit (125, 425) durch die Anlassereinrichtung (125E) anzulassen, deren Drehzahl auf eine zweite Drehzahl erhöht wird, wobei die zweite Drehzahl größer als die erste Drehzahl ist.

11. Verfahren zum Starten einer Antriebseinheit (125, 425) nach Anspruch 10, zudem umfassend: Vergleichen der ersten Drehzahl, bei jedem Versuch des Anlassens, mit einer zweiten, vorbestimmten Drehzahl und Aktivieren eines Störungssignals, wenn die erste Drehzahl gleich oder größer als die zweite, vorbestimmte Drehzahl ist.

## Revendications

1. Système de démarrage (200, 201) pour un véhicule (100), ledit système de démarrage (200, 201) comprenant :
un moyen de démarrage (125E) relié de manière opérationnelle à un vilebrequin (125B) d'une unité de puissance (125, 425) dudit véhicule (100) ;
une source d'énergie (205) couplée électriquement audit moyen de démarrage (125E) pour entraîner ledit moyen de démarrage (125E) ; et
une unité de commande de démarrage (210) comportant des moyens (M1-M6, 210F) pour commander la vitesse de rotation du moyen de démarrage (125E) et comportant des moyens pour calculer un premier paramètre, qui comprend au moins un parmi un régime moteur, une vitesse de rotation du vilebrequin (125B) ou une vitesse de rotation d'un ou plusieurs éléments rotatifs reliés audit vilebrequin (125B),
dans lequel ladite unité de commande de démarrage (210), lors d'une tentative initiale de démarrage du moteur, essaie de mettre en marche ladite unité de puissance (125, 425) par l'intermédiaire dudit moyen de démarrage (125E), dont la vitesse de rotation est augmentée jusqu'à une première vitesse,
ladite unité de commande de démarrage (210) vérifie, sur la base d'au moins le premier paramètre de ladite unité de puissance (125, 425), si l'unité de puissance a démarré ou non, et, au cours d'une première tentative de démarrage du moteur après l'échec de la tentative initiale, ladite unité de commande de démarrage (210) essaie de mettre en marche ladite unité de puissance (125, 425) par l'intermédiaire dudit moyen de démarrage (125E), dont la vitesse de rotation est augmentée jusqu'à une deuxième vitesse,
ladite unité de commande de démarrage étant **caractérisée en ce que**
ladite deuxième vitesse est supérieure à ladite première vitesse.

2. Système de démarrage (200, 201) selon la revendication 1, dans lequel ledit moyen de démarrage (125E) comprend un rotor (125ER), et ledit rotor (125ER) est monté sur au moins l'un du vilebrequin (125B) ou un arbre disposé sensiblement parallèle audit vilebrequin (125B).

3. Système de démarrage (200, 201) selon la revendication 1, dans lequel ledit moyen de démarrage (125E) comprend un générateur de démarrage intégré (125E), une magnéto ou un moteur électrique, ledit générateur de démarrage intégré (125E) comportant un stator (125ES) et un rotor (125ER), ledit rotor (125ER) étant fonctionnellement relié audit vilebrequin (125B) et ledit rotor comprenant une pluralité d'éléments magnétiques, et ledit stator (125ES) supporté par ladite unité de puissance (125).

4. Système de démarrage (200, 201) selon la revendication 1, dans lequel ladite unité de commande de démarrage (210) est capable de faire tourner ledit vilebrequin (125B) dans une rotation inverse de sorte qu'un piston de l'unité de puissance (125, 425) soit positionné dans une position de départ d'une course d'expansion de celui-ci.

5. Système de démarrage (200, 201) selon la revendication 1, dans lequel l'unité de commande de démarrage (210) compare le premier paramètre, à savoir le régime du moteur, lors de chaque tentative de démarrage, à un deuxième régime prédéterminé, et l'unité de commande de démarrage (210) identifie une défaillance lorsque le premier régime est égal ou supérieur au deuxième régime prédéterminé.

6. Système de démarrage (201) selon la revendication 1, dans lequel ledit système de démarrage (201) est disposé sensiblement séparément de ladite unité de puissance (425), une poulie motrice (410) étant reliée au rotor (125ER) du moyen de démarrage (125E) et une poulie entraînée (415) reliée au vilebrequin (125B), et une courroie de transmission (405) reliant la poulie motrice (410) à la poulie entraînée (415), ladite poulie entraînée (415) étant adaptée pour faire office de volant d'inertie pour l'unité motrice (425).

7. Système de démarrage (200, 201) selon la revendication 1, dans lequel ladite première vitesse est augmentée jusqu'à ladite deuxième vitesse par au moins l'une des méthodes suivantes : augmentation progressive, augmentation exponentielle et augmentation aléatoire.

8. Système de démarrage (200, 201) selon la revendication 1, dans lequel l'unité de commande de démarrage (210) comporte une pluralité des transistors MOSFET (M1, M2, M3, M4, M5 et M6) qui sont couplés électriquement à un ou plusieurs enroulements du stator (125ES), et la pluralité des transistors MOSFET (M1, M2, M3, M4, M5 et M6) étant commandés par un microcontrôleur (210E) de ladite unité de commande de démarrage (210), et lesdits enroulements étant connectés au moins par l'une des connexions en étoile ou en triangle.

9. Système de démarrage (200, 201) selon la revendication 1, dans lequel le véhicule (100) comprend au moins un véhicule à deux roues (100) ou un véhicule à trois roues.

10. Procédé de démarrage d'une unité de puissance (125, 425) par l'intermédiaire d'un système de démarrage (200, 201), ladite unité de puissance (125, 425) ayant des moyens (M1-M6, 210F) pour contrôler la vitesse de rotation du moyen de démarrage (125E) et ayant des moyens pour calculer un premier paramètre, qui comprend au moins un parmi un régime moteur, une vitesse de rotation d'un vilebrequin (125B) ou une vitesse de rotation d'un ou plusieurs éléments rotatifs reliés à un vilebrequin (125B) relié de manière opérationnelle à un moyen de démarrage (125E), ledit procédé comprenant les étapes de :
permettre audit moyen de démarrage (125E), lors d'une tentative initiale de démarrage du moteur, de mettre en marche ladite unité de puissance (125, 425), dont la vitesse de rotation est augmentée jusqu'à une première vitesse par une unité de commande de démarrage (210) dudit système de démarrage (200, 201) ;
vérifier le premier paramètre de ladite unité de puissance (125, 425), à savoir si l'unité motrice a démarré ou non ; et
en fonction de ce premier paramètre, permettre la mis en marche de ladite unité de puissance (125, 425) lors d'une première tentative de démarrage du moteur après l'échec de la tentative initiale, ladite unité de commande de démarrage (210) essayant de mettre en marche ladite unité de puissance (125, 425) par l'intermédiaire dudit moyen de démarrage (125E), dont la vitesse de rotation est augmentée jusqu'à une deuxième vitesse,
ladite deuxième vitesse étant supérieure à la première vitesse.

11. Procédé de démarrage d'une unité de puissance (125, 425) selon la revendication 10, comprenant en outre la comparaison, lors de chaque tentative de mis en marche, de ladite première vitesse avec une deuxième vitesse prédéterminée, et l'activation d'un signal de défaillance lorsque ladite première vitesse est égale ou supérieure à ladite deuxième vitesse prédéterminée.
